# EUROPÄISCHE PATENTSCHRIFT

(11) **EP 0 663 416 B1**
(45) Veröffentlichungstag und Bekanntmachung des Hinweises auf die Patenterteilung: **27.10.1999**
(21) Anmeldenummer: 95100164.3
(22) Anmeldetag: 07.01.1995
(51) Int. Cl.: C08G 63/83, C08K 5/05

(54) **Verfahren zur Herstellung von thermoplastischen Polyestern mit niedrigem Carboxylendgruppengehalt**
Process for the preparation of thermoplastic polyesters having a low content of carboxylic and groups
Procédé pour la préparation de polyesters thermoplastiques à faible teneur en groupes carboxyliques terminaux

(30) Priorität: 15.01.1994 DE 4401055
(43) Veröffentlichungstag der Anmeldung: 19.07.1995
(73) Patentinhaber: BASF AKTIENGESELLSCHAFT, 67056 Ludwigshafen (DE)
(72) Erfinder: Braune, Peter, Dr., D-55234 Erbes-Büdesheim (DE)

(56) Entgegenhaltungen:
- EP-A- 0 501 543
- GB-A- 1 100 877
- GB-A- 1 240 743
- GB-A- 2 150 580
- CHEMICAL ABSTRACTS, vol. 81, no. 10, 9.September 1974 Columbus, Ohio, US; abstract no. 50311v, KOSHITA A. ET AL: "Polyester" Seite 20; XP002038438 & JP 07 401 794 A (UNITIKA LLTD) 20.März 1970
- PATENT ABSTRACTS OF JAPAN vol. 015, no. 126 (C-0817), 27.März 1991 & JP 03 009923 A (DAINIPPON INK & CHEM INC), 17.Januar 1991
- FRANCK, A.; BIEDERBICK, K.: 'Kunstoff-Kompendium', 1993, VOGEL BUCHVERLAG, WÜRZBURG, DE * Seite 180 - Seite 181 *

## Beschreibung

Die vorliegende Erfindung betrifft ein Verfahren zur Herstellung von thermoplastischen Polyestern durch Polykondensation von Dihydroxyverbindungen und Dicarbonsäuren oder deren Estern bzw. esterbildenden Derivaten.

Verfahren der vorstehend genannten Art werden insbesondere zur Herstellung von Polyalkylenterephthalaten weltweit in großem Umfang technisch durchgeführt.

Hierbei ergibt sich jedoch, daß bei steigender Viskosität auch der Carboxylendgruppengehalt (COOH-Zahl) ansteigt, wodurch das Produkt weniger stabil, insbesondere weniger hydrolysestabil, wird. Bei der Herstellung von Polymerblends oder Polymermischungen, beispielsweise mit Polycarbonaten oder Styrolcopolymeren, führt eine hohe COOH-Zahl zu unerwünschten Umesterungen.

Die Mitverwendung von Alkalimetallverbindungen bei der Polykondensation ist an sich bekannt und z.B. in der EP-A 215 364 und der EP-A 29 285 beschrieben. Die Mengen an zugesetzter Alkalimetallverbindung betragen dabei gemäß EP-A 29 285 etwa 0,1 bis 2 Gew.-%, bezogen auf Polyester bzw. 0,02 bis 1 mol pro kg an Polyester (EP-215 364). Derartig relativ hohe Mengen sind jedoch im Endprodukt für manche Anwendungen nachteilig.

Der vorliegenden Erfindung lag daher die Aufgabe zugrunde, ein Verfahren zur Herstellung von Polyestern der eingangs erwähnten Art zur Verfügung zu stellen, welches ein Produkt mit niedriger COOH-Zahl bei gleichbleibender Viskosität liefert.

Diese Aufgabe wurde erfindungsgemäß dadurch gelöst, daß bei einem Verfahren zur Herstellung von thermoplastischen Polyestern durch Polykondensation von aliphatischen Dihydroxyverbindungen mit Dicarbonsäuren oder deren Estern bzw. esterbildenden Derivaten, ein Alkalimetallalkoholat oder ein Erdalkalimetallalkoholat in einer Menge von kleiner als 1 mmol pro kg Polyester, der bei vollständiger stöchiometrischer Umsetzung entsteht, berechnet als Alkalimetall bzw. Erdalkalimetall, zu Beginn der Umesterung zugegeben wird.

Nach dem erfindungsgemäßen Verfahren sind Polyester zugänglich die bei gleichbleibender Viskosität niedrigere COOH-Zahlen auf weisen. Zudem ist das entstandene Produkt von hellerer Farbe, hydrolysestabiler und für Herstellung von Polymerblends oder Polymermischungen besser geeignet. Weiterhin bietet das erfindungsgemäße Verfahren den Vorteil, daß die Herstellung der Polyester gleichmäßig abläuft und, sofern als Diolkomponente 1,4-Butandiol eingesetzt wird, daß ein geringerer Anteil an 1,4-Butandiol in einer Nebenreaktion zu Tetrahydrofuran umgesetzt wird. Zudem können die so hergestellten Polyester noch einer Festphasenkondensation (Tempern unter Stickstoffatmosphäre) unterworfen werden, wodurch Polyester mit hohem Molekulargewicht zugänglich werden.

Als Dihydroxyverbindungen werden aliphatische Diole eingesetzt.

Vorteilhaft weisen diese 2 bis 20, insbesondere 2 bis 12 C-Atome auf, besonders bevorzugt werden aliphatische Diole mit 2 bis 12 C-Atomen, insbesondere mit 2 bis 6 C-Atomen.

Beispielhaft seien hier Ethandiol (Ethylenglykol), 1,3-Propandiol, 1,4-Butandiol, Cyclohexandiole, Hydrochinon, Resorcin und Bisphenol A genannt, wovon Ethandiol und 1,4-Butandiol sonders bevorzugt sind.

Als Dicarbonsäuren können aliphatische und/oder aromatische Dicarbonsäuren mit vorzugsweise 4 bis 20, insbesondere 4 bis 12 C-Atomen eingesetzt werden.

Beispielhaft seien genannt Isophthalsäure, Phthalsäure, Terephthalsäure, alkylsubstituierte Derivate der vorstehend genannten Säuren, Naphthalindicarbonsäuren (2,6 und 2,7), aliphatische Dicarbonsäuren wie Bernsteinsäure, Adipinsäure, Sebacinsäure, Azelainsäure und Decandicarbonsäure, wovon Iso- und Terephthalsäure oder deren Mischungen besonders bevorzugt werden.

Aus dem Vorstehenden ergibt sich, daß nach dem erfindungsgemäßen Verfahren besonders vorteilhaft Polyalkylenterephthalate bzw. Polyalkylenisophthalate oder Copolyester mit Tere- und Isophthalsäure als Säurekomponente hergestellt werden können.

Zusätzlich zu den vorstehend genannten Komponenten können die erfindungsgemäß hergestellten Polyester auch noch geringere Mengen, vorteilhaft weniger als 10 Mol-%, bezogen auf die jeweilige Monomerkomponente, an weiteren Einheiten enthalten, die sich beispielsweise von Hydroxycarbonsäuren ableiten.

Nach dem erfindungsgemäßen Verfahren wird in einer ersten Stufe bei der Umsetzung der Ausgangsmonomere in an sich bekannter Weise weniger als 1 mmol, vorzugsweise 0,1 bis 0,9 mmol und insbesondere 0,2 bis 0,7 mmol, pro kg Polyester, einer Alkalimetallalkoholat oder Erdalkalimetallalkoholat (berechnet als Alkalimetall bzw. Erdalkalimetall) zugesetzt.

Grundsätzlich eignen sich Alkoholate der Alkalimetalle, vorzugsweise von Li, Na, K, besonders bevorzugt Na-Alkoholate.

Bevorzugt werden Natriumalkoholate mit vorzugsweise 2 bis 15, insbesondere 2 bis 8 C-Atomen verwendet. Beispiele besonders bevorzugter Vertreter sind Natriummethanolat und Natriumethanolat. Ganz besonders bevorzugt ist Natriummethanolat, welches besonders vorteilhaft in einer Menge von 0,2 bis 0,7 mmol, berechnet als Na eingesetzt wird. Es können auch Gemische verschiedener (Erd-)Alkalimetall-Alkoholate eingesetzt werden.

Die Zugabe erfolgt zu Beginn der Umesterung bei Anwendung des Umesterungs-/Polykondensationsverfahrens. Das Veresterungs-/Polykondensationsverfahren bzw. das Umesterungs-/Polykondensationsverfahren sind wohlbekannt und beispielsweise beschrieben in Ullmann's Encyklopädie der technischen Chemie (4. Auf.) 19, S. 61 bis 88 (1980).

Die nach dem erfindungsgemäßen Verfahren hergestellten Polyester können nach ihrer Herstellung noch getempert werden, wodurch eine Viskositätserhöhung erzielt werden kann. Üblicherweise tempert man bei Temperaturen im Bereich von 190 bis 220°C, vorzugsweise von 200 bis 210°C über einen Zeitraum von 15 bis 35 Stunden, bevorzugt 18 bis 26 Stunden.

### Beispiele

### Beispiel 1

Bei der Herstellung eines Polyesters aus Dimethylterephthalat und Butandiol-1,4 nach dem Umesterungs-/Polykondensationsverfahren wurden bereits bei der Umesterung, d.h. mit Zugabe der Monomeren, 0,6 mmol Na in Form von Natriummethanolat (bezogen auf 1 kg Polyester, der bei vollständiger stöchiometrischer Umsetzung entsteht) zugesetzt und das Produkt in der Schmelze bzw. Lösung kondensiert.

Man erhielt ein Produkt, das eine Viskositätszahl VZ von 130 aufwies und eine COOH-Zahl von 20.

Anschließend wurde das Produkt unter Stickstoffatmosphäre bei einer Temperatur von 205°C über einen Zeitraum von 24 Stunden getempert. Es wies dann eine Viskositätszahl VZ von 180 und eine COOH-Zahl von 8 auf.

### Beispiel 2

Es wurde wie in Beispiel 1 gearbeitet, jedoch wurden bei der Umesterung 0,36 mmol Na in Form von Natriummethanolat zugesetzt. Man erhielt so ein Produkt, das eine Viskositätszahl VZ von 130 aufwies und eine COOH-Zahl von 22.

Auch dieses Produkt wurde bei 205°C 24 Stunden lang getempert. Es wies dann eine VZ von 175 und eine COOH-Zahl von 10 auf.

### Vergleichsbeispiel V1

Es wurde wie in Beispiel 1 gearbeitet, jedoch ohne den Zusatz von Natriummethanolat. Man erhielt ein Produkt, das eine VZ von 130 aufwies und eine COOH-Zahl von 52.

Nach dem Tempern wies das Produkt eine VZ von 150 und eine COOH-Zahl von 40 auf.

Die Produkte aus den Beispielen 1 und 2 waren heller und hydrolysestabiler als das Produkt aus dem Vergleichsbeispiel V1.

Die Viskositätszahlen VZ wurde nach DIN 53728, Teil 3 (Januar '85) bestimmt.

Zur Bestimmung der COOH-Zahlen ging man wie folgt vor:
100 mg Polyester wurden in 7 ml Nitrobenzol bei 200°C gelöst. Diese Lösung wurde auf 150°C abgekühlt und mit 7 ml eines Gemisches aus 2 g Kaliumacetat pro 1 Lösung, wobei die Lösung aus 10 Gew.-% Wasser und 90 Gew.-% Isopropanol bestand, verdünnt. Dabei wurde Kalium an den Polyester gebunden und Essigsäure freigesetzt, welche titriert wurde.

## Patentansprüche

1. Verfahren zur Herstellung von thermoplastischen Polyestern durch Polykondensation von aliphatischen Dihydroxyverbindungen mit Dicarbonsäuren oder deren Estern bzw. esterbildenden Derivaten, dadurch gekennzeichnet, daß ein Alkalimetallalkoholat oder ein Erdalkalimetallalkoholat in einer Menge von kleiner als 1 mmol pro kg Polyester, der bei voll) ständiger stöchiometrischer Umsetzung entsteht, berechnet als Alkalimetall bzw. Erdalkalimetall, zu Beginn der Umesterung zugegeben wird.

2. Verfahren nach Anspruch 1, dadurch gekennzeichnet, daß als Alkalimetallalkoholat Natriummethanolat eingesetzt wird.

3. Verfahren nach Anspruch 1, dadurch gekennzeichnet, daß das Alkalimetallalkoholat oder Erdalkalimetallalkoholat in einer Menge von 0,1 bis 0,9 mmol pro kg Polyester, der bei vollständiger stöchiometrischer Umsetzung entsteht, berechnet als Alkalimetall bzw. Erdalkalimetall, zugegeben wird.

## Claims

1. A process for the preparation of thermoplastic polyesters by polycondensation of aliphatic dihydroxy compounds with dicarboxylic acids or their esters or ester-forming derivatives, wherein an alkali metal alcoholate or an alkaline earth metal alcoholate is added at the start of the transesterification in an amount of less than 1 mmol,
calculated as alkali metal or alkaline earth metal, per kg of polyester which is formed in the case of complete stoichiometric reaction.

2. A process as claimed in claim 1, wherein the alkali metal alcoholate used is sodium methylate.

3. A process as claimed in claim 1, wherein the alkali metal alcoholate or alkaline earth metal alcoholate is added in an amount of from 0.1 to 0.9 mmol, calculated as alkali metal or alkaline earth metal, per kg of polyester which is formed in the case of complete stoichiometric reaction.

## Revendications

1. Procédé de préparation de polyesters thermoplastiques par polycondensation de composés dihydroxy aliphatiques avec des acides dicarboxyliques ou leurs esters et respectivement dérivés générateurs d'esters, caractérisé en ce qu'un alcoolate de métal alcalin ou de métal alcalino-terreux est ajouté au commencement de la transestérification en une quantité inférieure à 1 mmole par kg de polyester, qui est formé lors d'une réaction stoechiométrique complète.

2. Procédé suivant la revendication 1, caractérisé en ce que, comme alcoolate de métal alcalin, on met en oeuvre du méthanolate de sodium.

3. Procédé suivant la revendication 1, caractérisé en ce que l'alcoolate de métal alcalin ou de métal alcalino-terreux est ajouté en une quantité de 0,1 à 0,9 mmole par kg de polyester, qui est formé lors d'une réaction stoechiométrique complète, en le calculant sous la forme de métal alcalin ou de métal alcalino-terreux.
